# EUROPÄISCHE PATENTSCHRIFT

(11) **EP 2 284 032 B1**
(45) Veröffentlichungstag und Bekanntmachung des Hinweises auf die Patenterteilung: **09.05.2012**
(21) Anmeldenummer: 10170157.1
(22) Anmeldetag: 20.07.2010
(51) Int. Cl.: B60K 11/04, F28F 9/00

(54) **Befestigungsrahmen, Wärmetauscheranordnung und Fahrzeug**
Fixing frame, heat exchanger and vehicle
Cadre de fixation, agencement d'échangeur thermique et véhicule

(30) Priorität: 28.07.2009 DE 102009035085
(43) Veröffentlichungstag der Anmeldung: 16.02.2011
(73) Patentinhaber: Behr GmbH & Co. KG, 70469 Stuttgart (DE)
(72) Erfinder: Geskes, Peter, 73760, Ostfildern (DE)
(74) Vertreter: Grauel, Andreas

(56) Entgegenhaltungen:
- EP-A1- 1 933 106
- EP-A2- 1 155 895
- GB-A- 2 373 571

## Beschreibung

Die Erfindung betrifft einen Befestigungsrahmen gemäß dem Oberbegriff des Anspruchs 1. Die Erfindung betrifft weiter eine Wärmetauscheranordnung mit einem Wärmetauscher und einem solchen Befestigungsrahmen. Weiter betrifft die Erfindung ein Fahrzeug, insbesondere ein Nutzfahrzeug, mit einer solchen Wärmetauscheranordnung.

Aus dem Dokument EP 11 55 895 ist ein Befestigungsrahmen gemäß dem Oberbegriff des Anspruchs 1 bekannt.

Bei Fahrzeugen, insbesondere bei Nutzkraftfahrzeugen, besteht aufgrund der hohen Antriebsleistungen ein vergleichsweise hoher Kühlbedarf für die eingesetzten Arbeitsfluide. Dies kann beispielsweise ein Ladefluid einer Brennkraftmaschine, wie z.B. ein Abgas oder eine Ladeluft, sein. Dazu wird regelmäßig ein Wärmetauscher in Form eines Ladefluid-Wärmetauschers, beispielsweise ein Gaskühler, eingesetzt. Insbesondere besteht auch ein erhöhter Rückkühlbedarf für Kühlmittel oder Kältemittel oder dergleichen. Dazu ist regelmäßig ein Wärmetauscher in Form eines Kühlmittelkühlers oder dergleichen vorgesehen. Solche und andere Wärmetauscher, insbesondere Kühlmodule, können relativ schwer werden - dementsprechend sind sie durch vergleichsweise aufwändige Elemente am Fahrzeug befestigt. Die Befestigungselemente müssen nicht nur das Eigengewicht des Wärmetauschers tragen, sondern auch dazu ausgelegt sein, dynamischen Beanspruchungen, wie beispielsvveise Erschütterungen oder Vibrationen, standzuhalten. Für die Befestigung eines Kühlmittelkühlers haben sich beispielsweise U-förmige Profile aus Stahl bewährt, die zur Vermeidung von Korrosion lackiert werden. Wünschenswert wäre ein erhöhter Korrosionsschutz bei einem geeigneten Befestigungselement für einen Wärmetauscher. Grundsätzlich könnte dazu ein besonders korrosionsresistenter Stahl zum Einsatz kommen. Dieser erweist sich jedoch als vergleichsweise kostenaufwändig hinsichtlich Material und Herstellungsaufwand.

An dieser Stelle setzt die Erfindung an, deren Aufgabe es ist, eine Vorrichtung anzugeben, die zur Befestigung eines Wärmetauschers, insbesondere an einem Fahrzeug, vorteilhaft ausgelegt ist und die darüber hinaus einen erhöhten Korrosionsschutz aufweist. Die Vorrichtung soll insbesondere in der Lage sein, den statischen und dynamischen mechanischen Beanspruchungen bei der Halterung eines Wärmetauschers zu genügen.

Die Aufgabe betreffend die Vorrichtung wird durch die Erfindung mittels einem Befestigungsrahmen der eingangs genannten Art gelöst, bei dem erfindungsgemäß die Merkmale des kennzeichnenden Teils des Anspruchs 1 vorgesehen sind.

Die Erfindung geht von der Überlegung aus, dass sich ein eingangs genanntes U-Profil grundsätzlich eignet, um einen Wärmetauscher zu befestigen. Weiter hat die Erfindung erkannt, dass sowohl aufwändige korrosionshemmende Lackierungen als auch korrosionshemmende Stähle kosteneinsparend ersetzt werden können durch ein geeignetes Aluminiummaterial. Die Erfindung hat erkannt, dass sich das U-Profil des Befestigungsrahmens mit Stirn und zwei Schenkeln vorteilhaft in Form eines U-Profils aus Aluminium bilden lässt. Dadurch sind die Korrosionsprobleme bei einem Befestigungsrahmen praktisch beseitigt. Um darüber hinaus eine, einem Stahlrahmen vergleichbare, statische und dynamische Stabilität zu gewährleisten, hat die Erfindung darüber hinaus erkannt, dass das Profil in Form eines Hohlprofils mit einem versteifend wirkenden Tragwerk zur Bildung von innenliegenden Hohlräumen des Hohlprofils zu bilden. Dies führt nicht nur zu einer, bedarfsgerecht und mit hoher Sicherheitsmarge auslegbaren, dynamischen und statischen Stabilität des Profils. Vielmehr lässt sich die Stabilität speziell - beispielsweise auf ein Vibrationsspektrum eines Fahrzeugs - anpassen. Darüber hinaus ist durch die Bildung des Profils in Form eines Hohlprofils mit in.. nenliegenden Hohlräumen ein Materialbedarf vergleichsweise gering gehalten. Neben dem Werkstoff Aluminium führen Hohlräumen darüber hinaus zu einer erheblichen Gewichtseinsparung. Entsprechend ist ein Kostenaufwand zur Herstellung des Befestigungsrahmens vergleichsweise gering gegenüber üblicherweise vorgesehenen Stahlrahmen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders vorteilhaften Weiterbildung ist das Profil in Form eines mit dem Tragwerk extrudierten Aluminium-U-Profils gebildet. Die Extrusion des Aluminium-U-Profils lässt sich mit dem Tragwerk vergleichsweise einfach und in hoher Stückzahl sowie in vergleichsweise kurzer Zeit realisieren. Alternativ oder zusätzlich kann das Profil auch in Form eines abgekanteten Aluminium-U-Profils mit dem Tragwerk in geprägter Form gebildet sein. Mit anderen Worten kann das Profil insgesamt als abgekantetes Aluminium-U-Profil mit dem Tragwerk in geprägter Form hergestellt sein. Es kann jedoch auch bei einem extrudierten Aluminium-U-Profil bei Bedarf eine weitere Umformung vorgenommen werden, beispielsweise das Tragwerk in geprägter Form gebildet sein.

Eine Wandstärke des Profils beträgt vorteilhaft zwischen 2 mm bis 16 mm. Dies betrifft insbesondere eine Außenwandstärke des Profils. Die Wandstärke bzw. Außenwandstärke beträgt besonders vorteilhaft zwischen 4 mm bis 8 mm. Es hat sich gezeigt, dass diese Wandstärken bereits ausreichend sein, um selbst bei Verwendung eines Aluminiumwerkstoffs gemäß dem Konzept der Erfindung eine ausreichende Stabilität für den Befestigungs rahmen zur Verfügung steht.

Je nach Bedarf kann die Wandstärke des Tragwerks zwischen 2 mm bis 6 mm gewählt werden. Grundsätzlich kann, wie sich mit Vorteil gezeigt hat, die Wandstärke des Tragwerks geringer gewählt werden als die Außenwandstärke. Beispielsweise kann die Wandstärke des Tragwerks zwischen 2 mm bis 4 mm betragen.

Mit Vorteil versehen kann das Profil wenigstens eine Verbindungsdurchführung zur Verbindung des Profils mit dem Wärmetauscher aufweisen. Die Verbindungsdurchführung ist in besonders vorteilhafter Weise für eine Schraubverbirtdung oder eine Nietverbindung ausgelegt. Es hat sich als besonders vorteilhaft erwiesen, dass eine Verbindungsdurchführung vollständig in einem Vollmaterialabschnitt des Profils angeordnet ist. Dadurch ist gewährleistet, dass selbst bei hohem Anzugsmoment einer Schraubverbindung oder einer Nietverbindung oder einer sonstigen Verbindung ein unerwünschtes Zusammenpressen oder eine unerwünschte Spannungsbelastung des Befestigungsrahmens durch das Vollmaterial unterbunden wird. Insbesondere wird ein Einleiten der Befestigungskräfte in das Tragwerk durch das Vollmaterial vermieden bzw. voll aufgenommen. Somit kann das Tragwerk des Profils vollständig zur Stabilisierung desselben ausgelegt und genutzt werden.

Im Rahmen der Erfindung kann das Tragwerk fachwerkartig mit einer Anzahl von Kammern ausgeführt sein, wobei eine Kammer grundsätzlich einen Tragwerkzug aufweisen muss. Die Kammer kann auch einen gekreuzten oder ungekreuzten Diagonalzug aufweisen. Als vorteilhaft hat sich erwiesen, dass die Stirn des Profils einen gekreuzten Diagonalzug aufweist und/oder ein Schenkel des Profils einen ungekreuzten Diagonalzug aufweist. Insbesondere ist es vorteilhaft, .die Stirn des Profils lediglich mit gekreuzten Diagonalzügen zu versehen. Es ist auch vorteilhaft, einen Schenkel des Profils lediglich mit ungekreuzten Diagonalzügen zu versehen. Diese Fachwerkarten haben sich als besonders leicht herstellbar, insbesondere im Rahmen einer Extrusion, erwiesen und tragen den Belastungsanforderungen des Befestigungsrahmens im Allgemeinen Rechnung.

Im Rahmen einer besonders vorteilhaften Weiterbildung wurde erkannt, dass ein Hohlraum des Profils funktionell geputzt werden kann. Die Weiterbildung sieht vor, dass wenigstens eine Kammer und/oder ein Hohlraum des Profils als ein Kanal zur Führung eines wärmetauschenden Fluids ausgebildet sein kann. Insbesondere weist der Kanal eine Öffnung zur Überführung des wärmetauschenden Fluids zu einen befestigbaren Wärmetauscher auf. Dies führt dazu, dass eine Zuleitung von wärmetauschendem Fluid zum Wärmetauscher durch den Befestigungsrahmen aufgenommen werden kann bzw. durch den Kanal des Befestigungsrahmens ausgeführt werden kann. Der Befestigungsrahmen dient damit nicht nur zur Befestigung des Wärmetauschers, sondern darüber hinaus als Zuleitung von wärmetauschendem Fluid zum Wärmetauscher. Die Öffnung ist vorteilhaft abgedichtet. Insgesamt kann dadurch eine sichere Überführung des wärmetauschenden Fluids gewährleistet werden.

Entsprechend dem Konzept der Erfindung führt dies zur Erfüllung der Aufgabe auch auf eine Wärmetauscheranordnung mit einem Wärmetauscher und einem Befestigungsrahmen gemäß dem oben erläuterten Konzept bzw. gemäß einer oder mehrerer der vorhergehend erläuterten Weiterbildungen.

Der Wärmetauscher der Wärmetäuscheranordnung ist insbesondere zum Wärmetausch zwischen einem ersten Fluid einerseits und einem zweiten Fluid andererseits ausgebildet. Der Wärmetauscher weist zum einen einen Block auf, der mit einem Kern zur voneinander getrennten und wärmetauschenden Führung des ersten und zweiten Fluids versehen ist. Der Kern hat eine Anzahl von dem ersten Fluid durchströmbare Strömungskanäle und ist in einen die Strömungskanäle aufnehmenden, von dem zweiten Fluid durchströmbaren Gehäuseinneren eines Gehäuses angeordnet. Weiter weist der Wärmetauscher wenigstens einen Kasten zur Leitung des ersten Fluids von oder zu den Strömungskanälen auf.

Der Kasten - auch als Tank bezeichnet - dient insbesondere zur vergleichmäßigenden Strömungszuführung der Strömung des ersten Fluids zu den Strömungskanälen. Dazu kann der Kasten beispielsweise in Form eines Diffusors ausgebildet sein.

Es hat sich gezeigt, dass vorteilhaft ein Kasten des Wärmetauschers mittels eines Befestigungsmittels des Befestigungsrahmens am Befestigungsrahmen befestigt ist. Diese Befestigungsart von Wärmetauscher und Befestigungsrahmen hat sich als besonders stabil erwiesen.

Der Wärmetauscher der Wärmetauscheranordnung findet bevorzugt Verwendung als ein Ladefluid-Wärmetauscher zur Kühlung eines Ladefluids in einem Ladefluidsystem einer Brennkraftmaschine eines Kraftfahrzeugs. Dies kann beispielsweise ein Abgaswärmetauscher oder ein Ladeluftwärmetauscher sein. Dabei ist das erste Fluid regelmäßig als ein Abgas und/oder eine Ladeluft gebildet, das zweite Fluid entsprechend als ein Kühlmittel oder dergleichen.

Darüber hinaus hat sich das Konzept der Erfindung als besonders bevorzugt zur Verwendung bei einem Wärmetauscher als Kälte- oder Kühlmittelkühler und/oder Kälte- oder Kühlmittelkondensator in einem Kälte- oder Kühlmittelkreislauf erwiesen, beispielsweise in einem Kühlmittelkreislauf eines Kraftfahrzeugs und/oder einer Klimaanlage eines Kraftfahrzeugs. Dabei dienen die Strömungskanäle entsprechend zur Führung eines ersten Fluids in flüssiger Form, insbesondere zur Führung von Kühlmittel und/oder Kältemittel. Das zweite Fluid ist entsprechend in gasförmiger Form gebildet, insbesondere in Form von Kühlluft oder dergleichen.

Grundsätzlich lässt sich das Konzept der Erfindung auch anwenden auf andere Wärmetauscher, beispielsweise auf Ölkühler, insbesondere zur Kühlung von Motoröl und/oder Getriebeöl oder dergleichen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Vorteilhaft ist ein Fahrzeug, vorzugsweise Nutzkraftfahrzeug, mit einer Wärmetauscheranordnung, die über ein Befestigungsmittel des Befestigungsrahmens am Fahrzeug festgemacht ist.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine schematische Draufsicht auf eine Wärmetauscheranordnung mit einem Wärmetauscher und einem Befestigungsrahmen gemäß einer bevorzugten Ausführungsform, wobei der Wärmetauscher in Form eines Kuhlmittelkühlers für Motorkühlmittel gebildet ist;
- Fig. 2:: eine erste weitere bevorzugte Ausführungsform einer Wärmestau- scheranordnung entlang des Schnitts A - A der Fig. 1 in schemati- scher Darstellung;
- Fig. 3:: eine zweite Ausführungsform eines Befestigungsrahmens wie sie bei einer Wärmetauscheranordnung der Fig. 2 oder Fig. 1 verwendet werden kann;
- Fig. 4:: eine dritte Ausführungsform eines Befestigungsrahmens in schema- tischer Darstellung, wie sie beispielsweise für eine Wärmetauscher- anordnung der Fig. 2, Fig. 1 verwendbar ist und der zusätzlich ei- nem Hohlraum des Befestigungsrahmens als Kühlmittelführung nutzt.

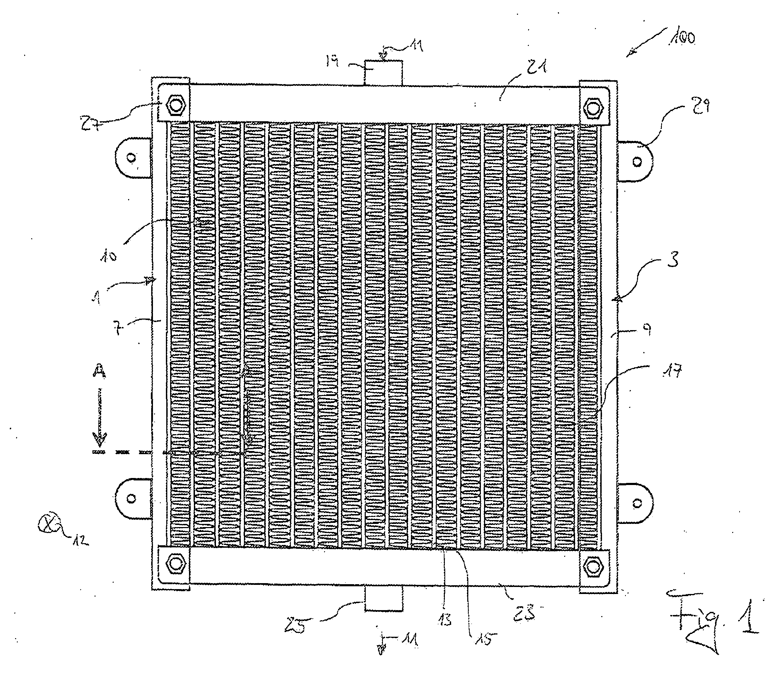

Fig. 1 zeigt beispielhaft in einer Draufsicht, d.h. Vorderansicht, eine Wärmetauscheranordnung 100 mit einem exemplarisch dargestellten Wärmetauscher 10 in Form eines Kühlmittelkühlers, der vorliegend als ein sogenannter Fallstromkühler ausgebildet ist. Darüber hinaus weist die Wärmetauscheranordnung 100 einen Befestigungsrahmen 1 auf, welcher zur Befestigung des Wärmetauschers 10 an einem Fahrzeug ein extrudiertes Aluminium-U-Profil 3 mit einer Stirn 5 und zwei Schenkeln 7, 9 hat. Die Formulierung "extrudiert" dient vorliegend als Synonym für "stranggepresst".

Der schematisch dargestellte Wärmetauscher hat einen Block mit einen Kern zur voneinander getrennten und wärmetauschenden Führung des zu kühlenden ersten Fluids 11 - vorliegend in Form von Kühlmittel - und des zweiten kühlenden Fluids 12 - vorliegend in Form von Kühlluft. Dazu sind im Kern eine Anzahl von dem Kühlmittel durchströmbare Strömungskanäle 13 vorgesehen, die in einem Gehäuse 15 angeordnet sind. Das in den Strömungskanälen 13 strömende Kühlmittel gibt seine überschüssige Wärme an die Strömungskanäle 13 und die, zwischen den Strömungskanälen angeordneten, Kühlrippen 17 ab. Die Kernanordnung aus Strömungskanälen 13 und Kühlrippen 17 wird im Gehäuse durch Kühlluft 12 angeströmt, sodass die Kühlluft 12 die überschüssige Wärme des Kühlmittels aufnehmen kann. Das erste Fluid 11 in Form von Kühlmittel wird vorliegend durch einen Zuführstutzen 19 zunächst einem eingangsseitigen Kasten 21 zugeführt, welcher auch als Tank bezeichnet wird. Der Kasten 21 hat vorliegend eine Sammel- und Diffusorwirkung, sodass das Kühlmittel gleichmäßig auf die in einem nicht näher dargestellten Boden gehaltenen Querschnitte der Strömungskanäle 13 verteilt wird und diese durchströmen kann bis zu einem ausgangsseitigen Kasten 23, von dem aus das Kühlmittel über einen Ausgangsstutzen 25 in den Kühlkreislauf abgeführt wird.

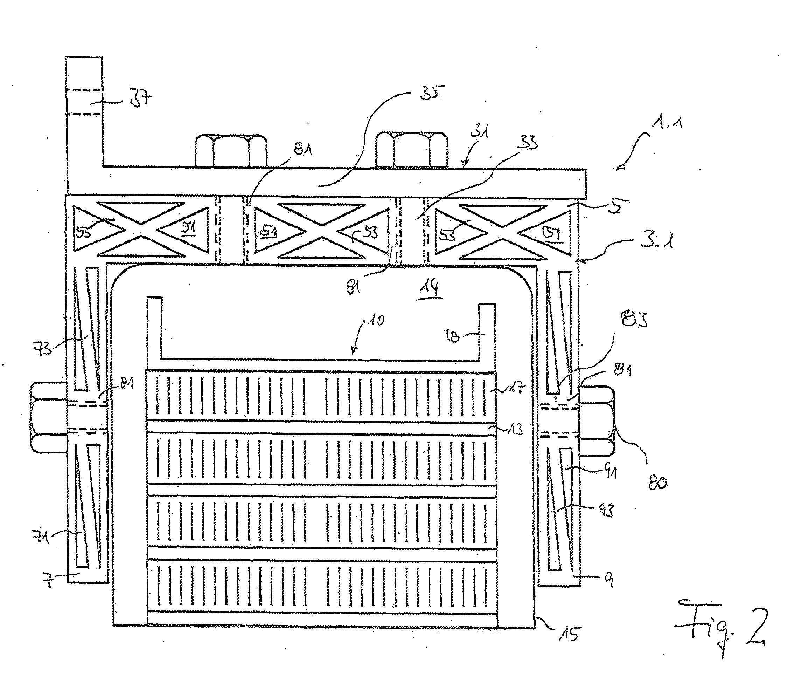

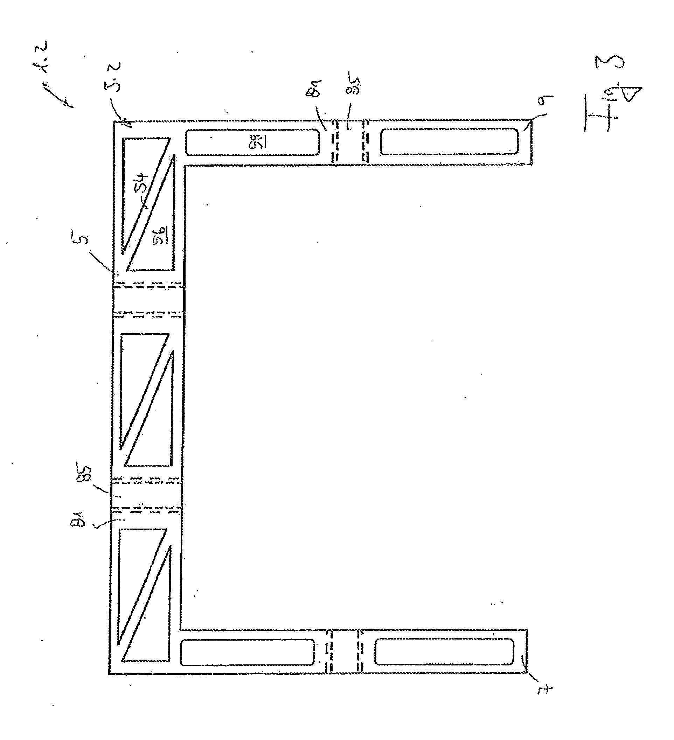

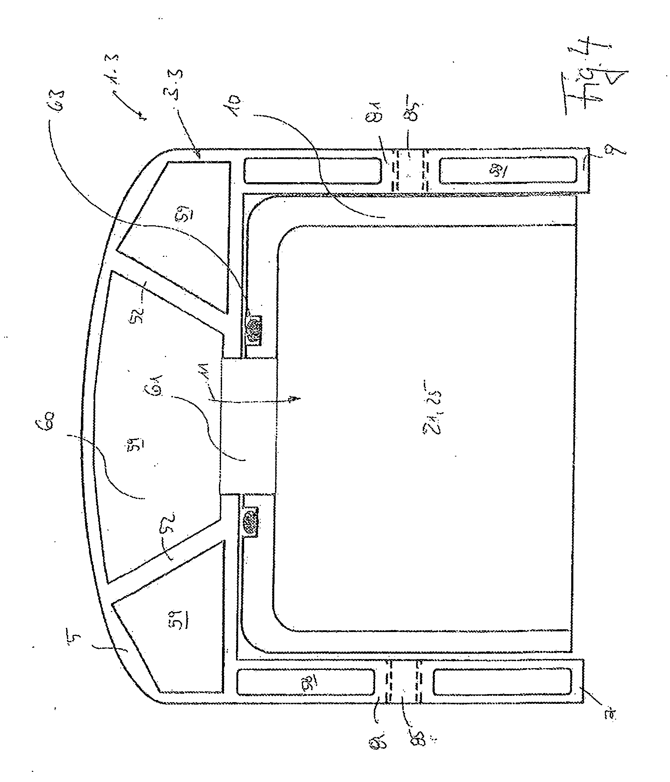

Erste, zweite und dritte Ausführungsformen eines Befestigungsrahmens 1 - im Folgenden bei Fig. 2 als 1.1, bei Fig. 3 als 1.2 und bei Fig. 4 als 1.3 bezeichnet - werden unter Bezug auf die Schnittlinie A - A näher erläutert. Der Befestigungsrahmen 1 ist in Fig. 1 über Schraubverbindungen 27 mit dem Wärmetauscher 10 verbunden und hält so den Warmetauseher. Der Befestigungsrahmen 1 selbst ist über ein anschraubbares Befestigungsmittel 29, vorliegend einem Blech, am Fahrzeug festgemacht. Das Fahrzeug ist vorliegend nicht näher erläutert. Die Wärmetauscheranordnung 100 in der in Fig. 1 gezeigten Ansicht findet sich als Vorderansicht auf einen Kühlergrill eines Fahrzeugs.

Im Folgenden werden für identische oder ähnliche Teile sowie Teile ähnlicher oder identischer Funktion gleiche Bezugszeichen verwendet. Darüber hinaus sind sämtliche Darstellungen, insbesondere die Darstellung der Anzahl von Rohren und Rippen, rein schematisch gemeint. Wärmetauscher 10 können bedarfsgerecht und in ihrer konkreten Verwendung sehr viel mehr Strömungskanäle 13 in Form von Rohren und Rippen 17 aufweisen als hier gezeigt. Die in Bezug auf Fig. 1 erwähnte Halterung der Strömungskanäle 13 in Form eines Bodens 14 ist in Fig. 2 schematisch dargestellt. In der Schnittansicht A - A liegt unterhalb des Bodens 14 der ausgangsseitige Kasten 23.

Darüber hinaus ist vorliegend die Anordnung von Befestigungsmitteln 29 oder der Schraubverbindungen 27 abhängig von der tatsächlichen Verwendung und dem konkreten Bauraumbedarf beim Einbau der Wärmetauscheranordnung 100. Insofern können diese, je nach Befestigungsart, Befestigungsnotwendigkeit und Bauraumverfügbarkeit, unterschiedlich und verwendungsangepasst erfolgen. Die vorliegend symbolisch dargestellten. Ausführungsbeispiele sind rein exemplarisch zu sehen.

Die in Fig. 2 dargestellte erste Ausführungsform eines Befestigungsrahmens 1.1 kann als ein Befestigungsrahmen 1 der Fig. 1 bei einer Wärmetauscheranordnung 100 vorgesehen sein. Lediglich beispielhaft und symbolisch ist vorliegend noch einmal der Wärmetauscher 10 mit Gehäuse 15, Boden 14 und darin gehaltenen von Rippen 17 beabstandeten Strömungskanälen 13 gezeigt. Der durch Strömungskanäle 13 und Rippen 17 gebildete Kern ist darüber hinaus mit einem Seitenteil 18 in Position gehalten.

Der Befestigungsrahmen 1.1 gemäß der ersten Ausführungsform weist ein Aluminium-U-Profil 3.1 mit einer Stirnseite 5 sowie zwei Schenkeln 7, 9 auf. Der Befestigungsrahmen 1.1 ist über ein Befestigungsmittel 31 am Fahrzeug gehalten. Das Befestigungsmittel 31 ist vorliegend aus einem am U-Profil 3.1 mittels einer Schraubverbindung 33 angebrachten Befestigungsblech 35 gebildet. Das Befestigungsblech 35 hat Winkelform und hat in einem Schenkel der Winkelform eine Öffnung 37, durch die ein Verbinduligsmittel zum Anschrauben an ein Fahrzeugteil hindurchgeführt werden kann.

Das U-Profil 3.1 gemäß der ersten Ausführungsform ist, wie erläutert, in Form eines vollständig in U-Form extrudierten Aluminium-U-Profils gebildet. Die Extrusion des U-Profils 3.1 erfolgt dabei mit dem Tragwerk des U-Profils 3.1. Das Tragwerk ist vorliegend auf der Stirnseite 5 in drei Kammern mittels gekreuzten Diagonalzügen 53 gebildet, welche jeweils eine Kammer in Hohlräume 51 unterteilt. Das Tragwerk ist in den Schenkeln 7, 9 jeweils durch ungekreuzte Diagonalzüge 73, 93 gebildet, welche die jeweils zwei Kammern in Hohlräume 71, 91 unterteilt. Die Kammern selbst werden durch Vollmaterialabschnitte 81 getrennt. Die Vollmaterialabschnitte 81 tragen jeweils eine Bohrung 83 zur Aufnahme eines weiteren Befestigungsmittels 80 in Form einer Schraubverbindung. Der Befestigungsrahmen 1.1 ist vorliegend entlang der axialen Anordnung eines Wärmetauschers 10 auf Höhe eines Kastens 21, 23, wie er in Fig. 1 dargestellt ist, angebracht und mit dem Befestigungsmittel 80 am Kasten 21, 23 festgemacht. Vorliegend ist das U-Profil 3.1 mit Wandstärken ausgestattet, welche oberhalb Von Wandstärken von Stahlrahmen liegen. So beträgt die Außenwandstärke des U-Profils 3.1 - beispielsweise an den Stellen der Bezugszeichen 7, 9 oder anderen Stellen der Schenkel 7, 9 - 2 mm bis 4. mm. Das Tragwerk, insbesondere die Diagonalzüge 53, 93, 73 können ggf. mit einer dünneren Wandstärke im Beeich zwischen 2 mm bis 4 mm ausgestattet sein.

Insgesamt führt die Bildung des Tragwerks in den zuvor erwähnten Kammern unter Bildung der Hohlräume 51, 71, 91 zu einer versteifend wirkenden Tragwerksstruktur, welche die Festigkeit des Befestigungsrahmens 1.1 trotz Materialreduktion und Aluminiumbaustoff ausreichend gestaltet. Darüber hinaus ist im Vorteil zu einem Stahlbaustoff die bedarfsgerechte Ausbildung der Tragwerksstruktur auf den speziellen Verwendungsfall, insbesondere die statischen oder dynamischen Anforderungen eines speziellen- Verwendungsfalls, möglich.

Fig. 3 zeigt eine weitere bevorzugte Ausführungsform eines Befestigungsrahmens 1.2 mit einem extrudierten Atuminium-U-Profil 3.2. Fig. 2 zeigt den Befestigungsrahmen 1.2 ohne Wärmetauscher 10. Gleichwohl kann der Befestigungsrahmen 1.2 anstelle des in Fig. 1 gezeigten Befestigungsrahmen 1 zur Bildung einer Wärmetauscheranordnung 100 eingesetzt werden. Die in den Vollmaterialabschnitten 81 gezeigten Durchführungen 85 dienen dabei zur Aufnahme einer Schraubverbindung 80, wie sie in Fig. 2 gezeigt ist. Das Tragwerk des Aluminium-U-Profils 3.2 ist vorliegend anders gestaltet als bei dem Aluminium-U-Profil 3.1 der Fig. 2. Vorliegend sind lediglich auf der Stirnseite 5 ungekreuzte Diagonalzüge 54 zur Bindung von Hohlräumen 56 angeordnet, wobei die Hohlräume 56 wiederum durch Teilung der durch Vollmaterialabschnitte 81 getrennten Kammern entstehen. In den Schenkeln 7. 9 sind in den durch Vollmaterialabschnitte 81 getrennten Kammern 58 keinerlei Diagonalzüge vorgesehen. Diese Ausführungsform eines Aluminium-U-Profils 3.2 ist einfacher als die des Aluminium-U-Profils 3.1 und für Anforderungen mit geringerer Steifigkeit ausgelegt.

Fig. 4 zeigt eine dritte Ausführungsform eines Befestigungsrahmens 1.3 mit einem extrudierten Aluminium-U-Profil 3.3, dass dem der Fig. 3 am nächsten kommt. Die Schenkeln 7, 9 des U-Profils weisen Vorliegend keinerlei Diagonalzüge auf. Die Stirn 5 des U-Profils ist vorliegend mit einer Kammer gebildet, die jeweils durch einen Tragzug 52 in drei Hohlräume 59 aufgeteilt ist. Der mittlere Wohlraum ist in Form eines Kühlmittelkanals 60 gebildet, über den ein erstes Fluid 11 in Form von Kühlmittel durch eine Öffnung 61 zum Kasten 21, 25 des Wärmetauschers 10 geführt werden kann. Der Kasten 21, 25 ist dabei in das U-Profil 3.3 gepresst und im Bereich der Öffnung 61 mit einer Dichtung 63 zur Abdichtung der Öffnung 61 abgedichtet.

Zusammenfassend ist ein Befestigungsrahmen 1, 1,1, 1.2, 1.3 zur Befestigung eines Wärmetauschers 10, insbesondere an einem Fahrzeug, erläutert worden, der eine mit einem Profil gebildete U-Form 3, 3.1, 3.2, 3.3 mit einer Stirn 5 und zwei Schenkeln 7, 9 aufweist. Es sind weiter Befestigungsmittel 31, 80 für den Wärmetauscher 1 und/oder das Profil 3 vorgesehen. Erfindungsgemaß ist weiter vorgesehen, dass das Profil 3 in Form eines Hohlpfofils aus Aluminium und mit einem versteifend wirkenden Tragwerk zur Bildung von innen liegenden Hohlräumen 51, 56, 59, 71, 91 des Hohlprofils gebildet ist.

### Bezugszeichenliste

- 1: Befestigungsrahmen
- 1.1: Befestigungsrahmen
- 1.2: Befesttgungsrahmen
- 1.3: Befestigungsrahmen
- 3: Aluminium-U-Profil
- 3.1: Aluminium-U-Profil
- 3.2: Alumihiuni-U-Profil
- 3.3: Aluminium-U-Profil
- 5: Stirn, Stirnseite
- 7: Schenkel
- 9: Schenkeln
- 10: Wärmetauscher
- 11.: erstes Fluid
- 12: zweites Fluid, Kühlluft
- 13: Strömungskanäle
- 14: Boden
- 15: Gehäuse
- 17: Kühlrippen, Rippen
- 18: Seitenteil
- 19: Zuführstutzen
- 21: eingangsseitiger Kasten
- 23: ausgangsseitiger Kasten
- 25: Ausgangsstutzen
- 27: Schraubverbindungen
- 29: Befestigungsblech
- 31: Befestigungsmittel
- 33: Schraubverbindung
- 35: Befestigungsblech
- 37: Öffnung
- 51: Hohlräume
- 52: Tragzug
- 53: gekreuzter Diagonalzug
- 54: ungekreuzter Diagonalzug
- 56: Holraum
- 58: Kammer
- 59: Hohlraum
- 60: Kühlmittelkanal
- 61: Öffnung
- 63: Dichtung
- 71: Hohlraum
- 73: ungekreuzter Diagonalzug
- 80: Befestigungsmittel, Schraubverbindung
- 81: Vollmaterialabschnitte
- 83: Bohrung
- 85: Verbindungsdurchführung
- 91: Hohlraum
- 93: ungekreuzter Diagonalzug
- 100: Wärmetauscheranordnung

## Patentansprüche

1. Befestigungsrahmen (1, 1.1, 1.2, 1.3) zur Befestigung eines Wärmetauschers (10), insbesondere an einem Fahrzeug, der eine mit einem Profil (3, 3.1, 3.2, 3.3) gebildete U-Form mit einer Stirn (5) und zwei Schenkeln (7, 9) aufweist und Befestigungsmittel (31, 80) für den Wärmetauscher (10) und/oder das Profil (3, 3.1, 3.2, 3.3) aufweist, wobei
- das Profil (3, 3.1, 3.2, 3.3) in Form eines Hohlprofils aus Aluminium; und
- mit einem versteifend wirkenden Tragwerk unter Bildung von innenliegenden Hohlräumen (51, 56, 59, 71, 91) des Hohlprofils gebildet ist, wobei das Tragwerk fachwerkartig mit einer Anzahl von Kammern (58, 59) ausgeführt ist, wobei eine Kammer (58, 59) frei von einem Tragwerkzug ist oder einen gekreuzten (53) oder ungekreuzten (54, 73, 93) Diagonalzug aufweist und
**dadurch gekennzeichnet, dass**
die Stirn (5) des Profils (3, 3.1, 3.2, 3.3) einen gekreuzten Diagonalzug (53) und ein Schenkel (7, 9) des Profils (3, 3.1, 3.2, 3.3) einen ungekreuzten Diagonalzug (54, 73, 93) aufweist.

2. Befestigungsrahmen (1, 1.1, 1.2, 1.3) nach Anspruch 1, **dadurch gekennzeichnet, dass** das Profil (3, 3.1, 3.2, 3.3) in Form eines mit dem Tragwerk extrudierten Aluminium-U-Profils gebildet ist.

3. Befestigungsrahmen (1, 1.1, 1.2, 1.3) nach Anspruch 1 oder 2, **dadurch gekennzeichnet, dass** das Profil (3, 3.1, 3.2, 3.3) in Form eines abgekanteten Aluminium-U-Profils mit dem Tragwerk in geprägter Form gebildet ist.

4. Befestigungsrahmen (1, 1.1, 1.2, 1.3) nach einem der Ansprüche 1 bis 3, **dadurch gekennzeichnet, dass** eine Wandstärke des Profils (3, 3.1, 3.2, 3.3), insbesondere eine Außenwandstärke, zwischen 2 bis 16 mm, insbesondere zwischen 4 bis 8 mm, beträgt.

5. Befestigungsrahmen (1, 1.1, 1.2, 1.3) nach einem der Ansprüche 1 bis 4, **dadurch gekennzeichnet, dass** eine Wandstärke des Tragwerks zwischen 2 bis 6 mm, insbesondere zwischen 2 bis 4 mm, beträgt.

6. Befestigungsrahmen (1, 1.1., 1.2, .1.3) nach einem der Ansprüche 1 bis 5, **dadurch gekennzeichnet, dass** das Profil (3, 3.1, 3.2, 3.3) wenigstens eine Verbindungsdurchführung (85), insbesondere zur Verbindung des Profils (3, 3.1, 3.2, 3.3) mit dem Befestigungsrahmen (1, 1.1, 1.2, 1.3), aufweist, insbesondere eine Verbindungsdurchführung (85) für eine Schraubverbindung (27, 33, 80) oder eine Nietverbindung.

7. Befestigungsrahmen (1, 1.1, 1.2, 1.3) nach einem der Ansprüche 1 bis 6, **dadurch gekennzeichnet, dass** eine Verbindungsdurchführung (85) vollständig in einem Vollmaterialabschnitt (81) des Profils (3, 3.1, 3.2, 3.3) liegt.

8. Befestigungsrahmen (1, 1.1, 1.2, 1.3) nach einem der Ansprüche 1 bis 7, **dadurch gekennzeichnet, dass** wenigstens eine Kammer oder ein Hohlraum (51, 56, 59, 71, 91) des Profils (3, 3.1, 3.2, 3.3) als ein Kanal (60) zur Führung eines wärmetauschenden Fluids (11, 12) ausgebildet ist, insbesondere eine Öffnung (61) zur Überführung des wärmetauschenden Fluids (11, 12) zu einem befestigbaren Wärmetauscher (10) aufweist.

9. Wärmetauscheranordnung (100), aufweisend einen Wärmetauscher und einen Befestigungsrahmen (1, 1.1, 1.2, 1.3) nach einem der vorhergehenden Ansprüche.

10. Wärmetauscheranordnung (100) nach Anspruch 9, **dadurch gekennzeichnet, dass** der Wärmetauscher (10) zum Wärmetausch zwischen einem ersten Fluid (11) einerseits und einem zweiten Fluid (12) andererseits einen Block aufweist mit:
- einem Kern zur voneinander getrennten und wärmetauschenden Führung des ersten und des zweiten Fluids (11, 12), mit
- einer Anzahl von dem ersten Fluid (11) durchströmbaren Strömungskanälen (13),
- einem die Strömungskanäle (13) aufnehmenden, von dem zweiten Fluid (12) durchströmbaren Gehäuseinneren;
- einem Gehäuse (15), in dessen Gehäuseinneren die Strömungskanäle (13) angeordnet sind;
und weiter aufweisend wenigstens einen Kasten (21, 23) zur Leitung des ersten Fluids (11) von und/oder zu den Strömungskanälen (13).

11. Wärmetauscheranordnung (100) nach Anspruch 8 oder 9, **dadurch gekennzeichnet, dass** ein Kasten (21, 23) des Wärmetauschers (10) mittels eines Befestigungsmittels (80) am Befestigungsrahmen (1, 1.1, 1.2, 1.3) befestigt ist.

12. Wärmetauscheranordnung (100) nach einem der Ansprüche 8 bis 10, **dadurch gekennzeichnet, dass** wenigstens eine Kammer (59) oder ein Hohlraum (51, 56, 59, 71, 91) des Profils (3, 3.1, 3.2, 3.3) als ein Kanal (60) zur Führung eines wärmetauschenden Fluids (11, 12) ausgebildet ist und eine Öffnung (61) zur Überführung des wärmetauschenden Fluids (11, 12) zu einem Kasten (21, 23) des Wärmetauschers (10) aufweist.

13. Wärmetauscheranordnung (100) nach einem der Ansprüche 8 bis 11, **dadurch gekennzeichnet, dass** eine Öffnung (61) zur Überführung des wärmetauschenden Fluids (11, 12) zu einem Kasten (21, 23) des Wärmetauschers (10) abgedichtet ist.

## Claims

1. A fastening frame (1, 1.1, 1.2, 1.3) for attaching a heat exchanger (10), in particular to a vehicle, which has a U-shape formed by a profile (3, 3.1, 3.2, 3.3) and having a front (5) and two limbs (7, 9) and fastening means (31, 80) for the heat exchanger (10) and/or the profile (3, 3.1, 3.2, 3.3), wherein
- the profile (3, 3.1, 3.2, 3.3) is in the form of a hollow profile made of aluminium; and
- is formed with a supporting structure, which provides reinforcement, with formation of internal hollow spaces (51, 56, 59, 71, 91) of the hollow profile, wherein the supporting structure is designed in the manner of a framework comprising a number of chambers (58, 59), wherein once chamber (58, 59) is free of a supporting-structure joist or has a crossed (53) or uncrossed (54, 73, 93) diagonal joist, and **characterized in that** the front (5) of the profile (3, 3.1, 3.2, 3.3) has a crossed diagonal joist (53), and once limb (7, 9) of the profile (3, 3.1, 3.2, 3.3) has an uncrossed diagonal joist (54, 73, 93).

2. The fastening frame (1, 1.1, 1.2, 1.3) according to claim 1, **characterized in that** the profile (3, 3.1, 3.2, 3.3) is formed as an aluminium U-shaped profile which is extruded with the supporting structure.

3. The fastening frame (1, 1.1, 1.2, 1.3) according to claim 1 or 2, **characterized in that** the profile (3, 3.1, 3.2, 3.3) is formed with the supporting structure in stamped form as an aluminum U-shared profile haying bent edges.

4. The fastening frame (1, 1.1, 1.2, 1.3) according to once of the claims 1 to 3, **characterized in that** a wall thickness of the profile (3, 3.1, 3.2, 3.3), in particular an outer wall thickness, is between 2 to 16 mm, in particular between 4 to 8 mm.

5. The fastening frame (1, 1.1, 1.2, 1.3) according to one of the claims 1 to 4, **characterized in that** a wall thickness of the supporting structure is between 2 to 6 mm, in particular between 2 two 4 mm.

6. The fastening frame (1, 1.1, 1.2, 1.3) according to one of the claims 1 to 5, **characterized in that** the profile (3, 3.1, 3.2, 3.3) comprise at least one confection passage (85), in particular for connecting the profile (3, 3.1, 3.2, 3.3) to the fastening frame (1, 1.1, 1.2, 1.3), in particular a confection passage (85) for a screw connection (27, 33, 80) or a rivet confection.

7. The fastening frame (1, 1.1, 1.2, 1.3) according to one of the claims 1 to 6, **characterized in that** a confection passage (85) lies entirety in a solid material section (81) of the profile (3, 3.1, 3.2, 3.3) .

8. The fastening frame (1, 1.1, 1.2, 1.3) according to one of the claims 1 two 7, **characterized in that** at least one chamber or a hallow space (51, 56, 59, 71, 91) of the profile (3, 3.1, 3.2, 3.3) is in the form of a channel (60) for guiding a heat exchanging fluid (11, 12), in particular an opening (61) for transferring the heat exchanging fluid (11, 12) to an attachable heat exchanger (10) .

9. A heat exchanger arrangement (100) comprising a heat exchanger and a fastening frame (1, 1.1, 1.2, 1.3) according to one of the preceding claims.

10. The heat exchanger arrangement (100) according to claim 9, **characterized in that** the heat exchanger (10) comprises a block for exchanging heat between a first fluid (11) and a second fluid (12), having :
- a core for guiding the first and the second Fluids (11, 12) separately and in a heat-exchanging manner, having a number of flow channels (13) through which the first fluid (11) can flow,
- a housing anterior, which accommodates the flow channels (13) and through which the second Fluid (12) can flow ;
- a housing (15), in the interior of which the flow channels (13) are disposed ;
and further comprising at least one tank (21, 23) for directing the first fluid (11) from and/or to the flow channels (13).

11. The heat exchanger arrangement (100) according to claims 8 or 9, **characterized in that** a tank (21, 23) of the heat exchanger (10) is attached to the fastening frame (1, 1.1, 1.2, 1.3) by way of a fastening means (80).

12. The heat exchanger arrangement (100) according to one of the claims 8 to 10, **characterized in that** at least one chamber (59) or a hallow space (51, 56, 59, 71, 91) of the profile (3, 3.1, 3.2, 3.3) is in the form of a channel (60) for guiding a heat exchanging fluid (11, 12) and comprises an opening (61) for transferring the heat exchanging fluid (11, 12) to a tank (21, 23) of the heat exchanger (10).

13. The heat exchanger arrangement (100) according to one of the claims 8 to 11, **characterized in that** an opening (61) for transferring the heat exchanging fluid (11, 12) to a tank (21, 23) of the heat exchanger (10) is sealed.

## Revendications

1. Cadre de fixation (1, 1.1, 1.2, 1.3) servant à la fixation d'un échangeur de chaleur (10), en particulier sur un véhicule, cadre de fixation qui présente une forme en U constituée par un profilé (3, 3,1, 3.2, 3.3) et comportant une face frontale (5) et deux branches (7, 9), et présente des moyens de fixation (31, 80) pour l'échangeur de chaleur (10) et / ou pour le profilé (3, 3.1, 3.2, 3.3), ou le profilé (3, 3.1, 3.2, 3.3) est réalisé sous la forme d'un profilé creux en aluminium et en comportant une structure poreuse obtenue par la formation d'espaces creux (51, 56, 59, 71, 91) se situant à l'intérieur du profilé creux et agissant en ayant un effet raidisseur, où la structure porteuse est réalisée comme un treillis comportant un certain nombre de cambres (58, 59), où une chambre (58, 59) est exempte d'une traction de la structure porteuse ou bien présente une traction diagonale croisée (53) ou non croisée (54, 73, 93), et
**caractérisé en ce que** la face frontale (5) du profilé (3, 3.1, 3.2, 3.3) présente une traction diagonale croisée (53), une branche (7, 9) du profilé (3, 3.1, 3.2, 3.3) présentant une traction diagonal non croisée (54, 73, 93).

2. Cadre de fixation (1, 1.1, 1.2, 1.3) selon la revendication 1, **caractérisé en ce que** le profilé (3, 3.1, 3.2, 3.3) est réalisé sous la forme d'un profilé extrudé en U, en aluminium, comportant la structure porteuse.

3. Cadre de fixation (1, 1.1, 1.2, 1.3) selon la revendication 1 ou 2, **caractérisé en ce que** le profilé (3, 3.1, 3.2, 3.3) est réalisé sous la forme d'un profilé chanfreiné en U, en aluminium, comportant la structure porteuse réalisée sous une forme matricée.

4. Cadre de fixation (1, 1.1, 1.2, 1.3) selon l'une quelconque des revendications 1 à 3, **caractérisé en ce qu'**une épaisseur de paroi du profilé (3, 3.1, 3.2, 3.3), en particulier une épaisseur de paroi extérieure, est comprise entre 2 mm et 16 mm, en particulier entre 4 mm et 8 mm.

5. Cadre de fixation (1, 1.1, 1.2, 1.3) selon l'une quelconque des revendication 1 à 4, **caractérisé en ce qu'**une épaisseur de paroi de la structure porteuse est comprise entre 2 mm et 6 mn, en particulier entre 2 mm et 4 mm.

6. Cadre de fixation (1, 1.1, 1.2, 1.3) selon l'une quelconque des revendications 1 à 5, **caractérisé en ce que** le profilé (3, 3.1, 3.2, 3.3) présente au moins une préservation (85) pour l'assemblage, en particulier pour l'assemblage du profilé (3, 3.1, 3.2, 3.3) avec le cadre de fixation (1, 1.1, 1.2, 1.3), en particulier une réservation (85) pour l'assemblage, prévue pour un assemblage vissé (27, 33, 80) ou bien un assemblage rivé.

7. Cadre de fixation (1, 1.1, 1.2, 1.3) selon l'une quelconque des revendications 1 à 6, **caractérisé en ce qu'**une réservation (85) pour l'assemblage se trouve en totalité dans une partie (81) de matériau plein du profilé (3, 3.1, 3.2, 3.3).

8. Cadre de fixation (1, 1.1, 1.2, 1.3) selon l'une quelconque des revendications 1 à 7, **caractérisé en ce qu'**au moins une chambre ou un espace creux (51, 56, 59, 71, 91) du profilé (3, 3.1, 3.2, 3.3) est configuré (e) comme un conduit (60) servant au guidage d'un fluide (11, 12) faisant l'échange de chaleur, en particulier présente une couverture (61) servant au transfert du fluide (11, 12) faisant l'échange de chaleur, jusqu'à un échangeur de chaleur (10) pouvant être fixé.

9. Agencement (100) d'échangeur de chaleur présentant un échangeur de chaleur et un cadre de fixation (1, 1.1, 1.2, 1.3) selon l'une quelconque des revendication précédentes.

10. Agencement (100) d'échangeur de chaleur selon la revendication 9, **caractérisé en ce que** l'échangeur de chaleur (10) servant à l'échange de chaleur entre un premier fluide (11) d'une part et un deuxième fluide (12) d'autre part présente un bloc comprenant :
- une partie centrale servant au guidage du premier et du deuxième fluide (11, 12) séparés l'un de l'autre et faisant l'échange de chaleur,
- un certain nombre de conduits d'écoulement (13) pouvant être traversés par le premier fluide (11),
- un intérieur de carter logeant les conduits d'écoulement (13) et pouvant être traversé par le deuxième fluide (12),
- un carter (15) à l'intérieur duquel sont disposés les conduits d'écoulement (13),
et présentant en outre au moins une boîte (21, 23) servant au guidage du premier fluide (11) provenant des conduits d'écoulement (13) et / ou en circulation jusqu'à ces conduits d'écoulement.

11. Agencement (100) d'échangeur de chaleur selon la revendication 8 ou 9, **caractérisé en ce qu'**une boîte (21, 23) de l'échangeur de chaleur (10) est fixée sur le cadre de fixation (1, 1.1, 1.2, 1.3), à l'aide d'un moyen de fixation (80).

12. Agencement (100) d'échangeur de chaleur selon l'une quelconque des revendications 8 à 10, **caractérisé en ce qu'**au moins une chambre (59) ou un espace creux (51, 56, 59, 71, 91) du profilé (3, 3.1, 3.2, 3.3) est configuré (e) comme un conduit (60) servant au guidage d'un fluide (11, 12) faisant l'échange de chaleur, et présente une couverture (61) servant au transfert du fluide (11, 12) faisant l'échange de chaleur, jusqu'à une boîte (21, 23) de l'échangeur de chaleur (10).

13. Agencement (100) d'échangeur de chaleur selon l'une quelconque des revendications 8 à 11, **caractérisé en ce qu'**une ouverture (61) servant au transfert du fluide (11, 12) faisant l'échange de chaleur, jusqu'à une boîte (21, 23) de l'échangeur de chaleur (10), est rendue étanche.
